# EUROPEAN PATENT APPLICATION

(11) **EP 1 762 664 A2**
(43) Date of publication of application: **14.03.2007**
(21) Application number: 06019096.4
(22) Date of filing: 12.09.2006
(51) Int. Cl.: E04C 2/292, C09D 5/18

(54) **Fire resistant insulated building panels comprising an intumescent coating**

(30) Priority: 13.09.2005 US 224871
(71) Applicant: Air Products and Chemicals, Inc., Allentown, PA 18195-1501 (US)
(72) Inventor: Vincent, Jean Louise, Bethlehem, PA 18020 (US); Hulme, Steven Paul, Tytherington Cheshire, SK10 2WL (GB); Listemann, Mark Leo, Kutztown, PA 19530 (US); Grimminger, Jobst, 24558 Henstet-Ulzburg (DE); Panitzsch, Torsten, 24558 Henstedt-Ulzburg (DE); Morita, David Kiyoshi, Fort Collins, CO 80525 (US)
(74) Representative: Kador & Partner

(57) **Abstract**

This invention relates to an improvement in a process for producing a composite insulating panel comprised of at least one metal facer (4) having an interior face and an exterior face and a foam core (6) facing the interior face of at least one metal facer and to the resulting composite insulating panel. The improvement in the process for producing the composite insulating panel and improving the fire resistance thereof resides in the steps which comprise:
applying an ultrathin intumescent coating composition (10) to the exterior face of said metal facer in an amount to provide a coating thickness of 130 microns or less; and,
subsequently providing said foam core facing the interior face of said metal facer.

## Description

### BACKGROUND OF THE INVENTION

Composite insulating panels such as foamed core panels with metal facers (foam panels) have proven to be extremely useful for construction applications. The high insulation value and ease of handling (light-weight, quick construction) make these insulating panels ideal for roofs and walls in cold stores, freezers, and warehouses.

Composite insulating panels must meet a variety of requirements in order to be approved as roofing and wall components for construction applications. Included in these requirements is the passing of certain fire testing standards, which vary by application from country to country. For the panels to be used in the United States, they often must pass a composite test such as that described in the Factory Mutual 4880 Approval Standard for Class 1 Insulated Wall or Wall & Roof/Ceiling Panels. In the United Kingdom, a similar standard exists called the Loss Prevention Standard 1181, Requirements and Tests for Wall and Ceiling Lining Systems Used as Internal Constructions in Buildings.

Recent changes in environmental regulations governing the use of chlorofluorocarbon (CFC) blowing agents employed in the manufacture of composite insulating panels incorporating rigid polyurethane (PUR) or polyisocyanurate (PIR) foams have necessitated the use of more environmentally friendly blowing agents. Since rigid PUR and PIR foams have closed cell structures, the blowing agent becomes a permanent component of the composite insulating panel. Therefore, changing the blowing agent can have a dramatic effect on the overall flammability of the composite foam panel.

In an effort to address the environmental issues associated with blowing agents for PUR and PIR foams employed in composite foam panels, the industry has implemented the use of hydrocarbons such as pentane, cyclopentane, isopentane, and mixtures of pentanes as inexpensive non-ozone depleting alternatives to the expensive chlorofluorocarbon (HFC) blowing agents, e.g., 245fa. However, suitable hydrocarbon blowing agents are extremely flammable (pentane has a lower explosion limit of only 1.4% in air) and thus it is more difficult to formulate composite foam panels that meet the fire resistance requirements of the FM4880 or LPS1181 standards.

The industry has generally used two approaches to improving fire protection of composite insulating panels. One approach has been the modification of the composition of the insulating core by including flame retardant additives or inorganic additives or both. However, formulation modifications can be difficult to implement as they may impart adverse effects on the rest of the foamed panel properties. For instance, the use of many flame retardant additives in the insulating core, particularly foam core, formulations can create processing difficulties, they may change the panel density, and they may reduce the insulating properties of the panel.

Another approach to increasing the performance of a composite insulating panel in flammability testing has been the use of a fire barrier, such as a coating, mat, layer, or skin which protects the flammable foamed core of the panel from the fire.

The following articles and patents are representative of the art with respect to composite foam panels and approaches to reducing fire related safety issues using a fire barrier approach:

US 4,122,203 discloses a foamed polymeric material for construction applications comprised of a foam core formed between two facing skins. Interposed between the foam core and a facing skin is a thermal barrier flowed or sprayed onto the foamed material. The thermal barrier is a resinous material incorporating a Group IIA metal, e.g., magnesium sulfate heptahydrate.

US 4,024,310 discloses laminated panels having improved fire resistance comprising a core of rigid isocyanurate based foam foamed between two facing sheets. The laminate is characterized as having a layer of intumescent material, e.g., a borate or phosphate, applied to its inner surface at the foam-facer interface, optionally with an adhesive binder, bonded in a unitary construction. In the manufacturing process, a facing sheet having a layer of intumescent material, e.g., sodium silicate, is laid in the bottom of a mold with the coated side up and a foam mix poured or sprayed into to the mold and a second facing sheet applied thereon. The sodium silicate is applied at a level of 660 g/sq. m.

US 4,530,877 discloses a fire resistant foam insulated panel comprised of two skins or facers having a cellular plastic core, e.g., PUR or PIR foam, between them and a fire resistant coating on the interior face of at least one skin, at the foam-facer interface. In producing the panel, at least one skin is coated with a primer coat (7.6 microns) followed by a coating with the intumescent coating, i.e., 178 to 254 microns in thickness.

US 5,225,464 discloses intumescent coating compositions suited for use in construction applications. In the specification, a foamed isocyanurate panel with no metal facers is coated with the intumescent composition at a thickness of 2388 microns dry and tested for fire resistance.

EP 0 891,860 A2 discloses a fire resistant composite panel comprised of a foam core bonded to a metal outer layer. A layer of a perforated intumescent mat is interposed between the foam core and the metal layer, the perforations facilitating bonding therethrough between the core and metal layer. Intumescent mats are graphite based and in the form of flexible sheets of from 1 to 3 mm in thickness.

The article, Fire Protective Coating - Foam Core Panelized System Test, by Flame Seal Products, Inc., December 8, 1998 discloses polyisocyanurate foam panels systems having 3 separate coats of FX-110^{®}S intumescent coating applied on site by a brush roller at a thickness of 1143 microns to the formed panels. The polyisocyanurate foam core panes consisted of a 7.62 cm thick polymerized polyurethane modified polyisocyanurate having steel facing on both sides of the foam core.

### BRIEF SUMMARY OF THE INVENTION

This invention relates to an improvement in a process for producing a composite insulating panel suited for construction applications comprising the steps:
applying an insulating core to at least one facer having an interior face and an exterior face and said insulating core facing the interior face of at least one facer. The improvement in the process for producing the composite insulating panel and improving the fire resistance thereof resides in the steps which comprise:
   applying an intumescent coating composition to the exterior face of said facer in an amount to provide a dry film coating thickness of from 10 to 130 microns thereby forming a coated facer; and,
   subsequently providing said insulating core facing the interior face of said coated facer.

In preferred embodiments, the intumescent coating composition is applied via coil coating to the external face of a least one metal facer and a foamed core is sandwiched between the interior faces of two metal facers. The invention also is directed to the composite insulating panel.

Significant advantages in terms of enhancing the fire resistance of insulating panels and methods for producing such panels include:
an ability to reduce heat transfer through and resulting decomposition of insulating panel cores in the event of a fire;
an ability to greatly increase the performance of a PIR or PUR composite panel in the FM4880 or LPS1181 standards for walls and ceilings or other similar composite panel flammability tests;
an ability to use lower isocyanate index formulations in the range of 100 to 300 for PUR or PIR cores, which tend to have lower fire resistance than the higher index formulations;
an ability to limit heat transfer and thereby increase the time required for a foam core to reach char temperatures, e.g., 225 °C as compared to a conventional panel without an intumescent coating and to those foam panels having an intumescent coating applied to the interior face of the facer;
an ability to reduce char depth of a foamed core because of the limitation on heat transfer as compared to a composite foam panel without the intumescent coating and those having the intumescent coating applied to the interior face of the facer;
an ability to eliminate manual onsite application of intumescent coatings; and,
an ability to improve the performance of PIR and PUR based foam panels incorporating hydrocarbon blowing agents in composite panel flammability tests such as the FM4880 or the LPS1181.

### BRIEF DESCRIPTION OF THE DRAWINGS

Figs. 1 and 1 A provide a frontal and side view of a composite insulting panel of the composite foam panel type.

Fig. 2 is a temperature profile of the foam core temperatures as a function of time during burner tests.

Fig. 3 is a bar graph showing the time it takes for the foam core in coated and non coated composite foam panels to reach 225 °C at a 20 mm depth.

### DETAILED DESCRIPTION OF THE INVENTION

This invention is directed to an improvement for enhancing the performance of composite insulating panels in flammability tests such as the FM4880 and the LPC1181 tests, and to an improvement in a process for producing such insulating panels, such as foamed-core insulating panels. The panels are commonly called laminates, and are used in the construction sector as wall or ceiling cladding. The panels have excellent insulating properties, and thus are often used in cold stores and warehouses.

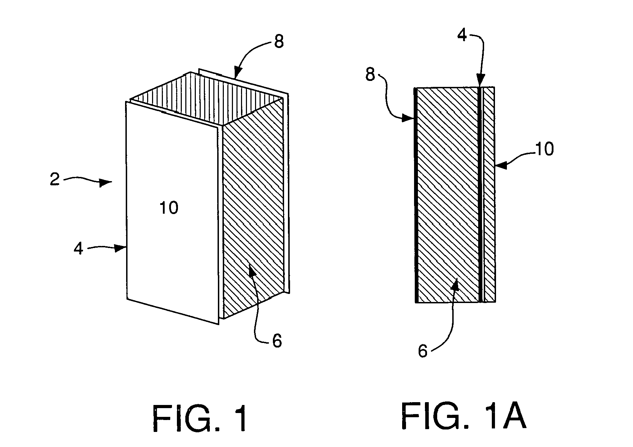

To facilitate an understanding of a composite insulating panel of the composite foam panel type and the mechanism for enhancing its performance in flammability testing reference is made to Figs. 1 and 1A. Fig. 1 is a frontal view of composite foam panel 2 and Fig 1 A is a side view of composite foam panel 2. Composite foam panel 2 has a front facer 4 which, when installed, has its exterior face directed toward the potential side of a fire, typically the interior side of a facility. A foam core 6 is applied to the interior face of front facer 4 and is encapsulated within the composite foam panel by the interior face of facer 8. An intumescent coating 10 is applied to the exterior face of front facer 4. In contrast to previous methods of composite foam panel construction, the intumescent coating 10 applied to front facer 4 is external to foam core 6 of composite foam panel 2 and at the facer-air interface. The foam panel when employed in a facility, then, is oriented such that the intumescent coated side of the facer is directed toward the potential point of fire. For example, a storage room constructed of the panels would have the intumescent coating directed toward the interior of the room.

In reference to the construction of the composite foam panel as illustrated in Figs. 1 and 1 A, it has been found that if an intumescent coating is applied to the exterior face of the facer at a level of 130 micron or less, e.g., 50 micron (dry film thickness), one can greatly improve the performance in a composite panel flammability test. Typically, one can use an intumescent coating thickness of about 25 to 75 microns and significantly reduce the level of decomposition of the foam core when the panel is exposed to a flame source. At a 10 to 130 microns thickness of the intumescent coating, it is possible to use a coil coating process that allows for coating the facer with the intumescent coating off site prior to applying the foam core and forming the composite foam panel. This method thereby greatly reduces on site construction labor associated with coating the panels with the intumescent material. In addition, being able to limit film thicknesses to 130 microns or less and formulate an intumescent coil coating allows for greater throughput and lower cost versus other coating processes.

Core material suited for insulating panels can be of many types of foamed organic polymers such as polystyrene, polyester, polyurethane, polyisocyanurate, etc. The use of an intumescent coating on the outside of the panel at a thickness of 10 to 130 microns will improve the performance of any of these types of foamed cores in a composite panel flammability test. Typically, the foamed core formulation will be based upon polyurethane or polyisocyanurate, but the invention includes all composite foam panels with facers coated with 10 to 130 microns of intumescent coating on the exterior face of at least one facer, and having a foamed organic-based polymer core. The invention also includes insulating panels with other insulating core components, such as fiberglass and rockwool, such that the panels have facers coated with 10 to 130 microns of intumescent coating on the exterior face of at least one facer.

Polyurethane (PUR) foam formulations differ from polyisocyanurate (PIR) foam in that the isocyanate index of PUR is generally from 85 to 200, whereas the isocyanate index for PIR is generally from 200 to 600. The isocyanate index is defined as the ratio of isocyanate functionalities to isocyanate-reactive functionalities in the formulation, multiplied by 100.

Typical PUR and PIR foam core formulations may be employed in forming the composite foam panel and such formulations comprise:
a polyol, such as a polyether polyol, a polyester polyol, or combination of both polyester and polyether polyols, and such polyols may have aromatic substitution. Exemplary polyether polyols are polyoxypropylene and polyoxyethylene polyols as well as copolymers thereof. The weight percent of polyol in the total formulation is typically between 15 and 50%. The polyol may also be substituted with halogen, nitrogen, phosphorous, fluorine, sulfur, or other heteroatom-containing substituents. Suitable polyols include Voranol 520 (Dow Chemical Company), Stepanol PS2352 (Stepan Company), or Daltolac R530 (Huntsman); and,
an isocyanate, such as diphenylmethane diisocyanate (MDI), toluene diisocyanates (TDI), polymeric MDI's or TDI prepolymers, or mixtures of isocyanates may be used as the isocyanate component. The weight percent of isocyanate in the total formulation is typically between 50 and 75%. Suitable isocyanates include Papi 27 (Dow Chemical Company) or Mondur MR (Bayer).

The PUR or PIR formulation may further comprise:
a surfactant, such as a silicone polyether, an organic surfactant, or a linear, branched or cyclic siloxane, or mixtures of surfactants. The weight percent surfactant in the total formulation is typically between 0 and 2%. Examples of suitable surfactants include Dabco DC5598 and Dabco DC193 (Air Products and Chemicals);
a catalyst, such as a tertiary amine, amine salt, a potassium, sodium, lithium or ammonium salt, a metal organic compound, or mixtures of these catalytic components. The weight percent of catalysts employed in the total formulation is typically between 0 and 3%. Examples of suitable catalysts include Dabco K-15, Dabco TMR, and Polycat 5 (Air Products and Chemicals);
a blowing agent, such as a low boiling hydrocarbon, hydrochlorofluorocarbon, hydrochlorocarbon, or hydrofluorocarbon, carbon dioxide or a reactive compound such as water or formic acid. Suitable halogenated blowing agents include HCFC-141b, HFC-365mfc, HFC-245fa, HFC-134a, methylene chloride, and trans 1,2-dichloroethylene. The hydrocarbons may be one or more cyclic, linear, or branched C3 to C8 hydrocarbons such as n-pentane, cyclopentane, isopentane, butane, 1-pentene, cyclopentene, hexene, hexanes, cyclohexane, and heptane; and,
other additives including a flame retardant, crosslinker, adhesion promoter, etc.

Intumescent coatings are known and a wide variety of intumescent coatings may be employed in providing fire resistance to the composite insulating panel. The components of an intumescent coating generally comprise a binder (such as epoxy or latex), a catalyst (such as an acid donor like ammonium polyphosphate), a blowing agent or spumific (such as melamine), and a polyhydridic carbon donor that forms a char on application of heat. These intumescent coatings are of the type that provide an insulating char barrier having a thickness many times their original thickness at char temperatures of approximately 200-300 °C. Often, the thickness reaches a height of 1 mm and greater when exposed to a temperature of 500 °C for 5 minutes. This thick carbon char offers thermal protection to the underlying substrate in that it limits heat transfer through the panel thus greatly reducing thermal decomposition, charring, melting, and formation of flammable or pyrophoric gases which can be generated from pyrolysis or decomposition of the core material of the insulating panel.

Suitable binders for an intumescent coating include epoxy, phenoxy, alkyd, acrylic, vinyl, polyester, and polyurethane resins. Vinyl acetate/ethylene copolymer emulsions, high solids epoxies, acrylics, and water-based latex also are commonly used in intumescent coatings. The coatings can be one part, such as latex, or two-part, such as amine-cured epoxies. In some cases, the binder may also act as the carbon source.

The catalyst is typically an acid source, such as phosphoric acid, sulfuric acid, ammonium salts of phosphoric acids, or ammonium polylphosphoric acid. The catalyst may also be a compound that decomposes to give an acid source. The catalyst may also be a base or a metal based compound, such as a metal oxide.

Blowing agents include melamine, and melamine phosphates. The blowing agent may also be a compound that decompose to ammonia, melamine, or other volatile compounds.

Carbon sources for generating char formation in the intumescent coating include polyhydric materials include starch; dextrin; sorbitol; pentaerythritol and its dimers and trimers; resorcinol; phenolics; triethylene glycol; methylol melamine; isano oil; and linseed oil. In some cases, the binder may also act as the carbon source for generating char formation.

Other additives for the intumescent coatings include pigments such as titanium dioxide, plasticizers such as chlorinated paraffin, organic or aqueous solvents, rheology modifiers, curing catalysts and accelerators, etc.

Typically the facers employed in the composite insulating panel are metal. Metal facers employed in the composite foam panels may be one or more of galvanized steel, stainless steel, copper, aluminum, metal foils of aluminum or steel, strip steel, coiled steel, or other appropriate metal material. The metal is preferably coiled steel. The metal surface may be zinc-coated, aluminum/zinc coated, zinc/iron coated, hot-dip galvanized to provide corrosion resistance or the metal facer may be exposed to other treatment steps such as chemical cleaning, plating, and thermal treatment. A typical thicknesses of a metal facer is less than 8 mm, and it may be as thin as 10 microns (foil). Preferred steel facers have a thickness of from 0.8 to 0.3 mm. Other facer materials such as reinforced fiber board, oriented strandboard, or reinforced paper may also be used.

A preferred method for applying the intumescent coating to the exterior face of a metal facer is that of coil coating. For coil coating application, the intumescent coating preferably should cure fast enough such that it can be applied and cured at a rate of 50 to 800 ft/min, corresponding to a 5-120 second cure. The coil coatings can be cured by a variety of curing techniques, including high temperatures of 200 to 300 °C, UV light, infra red, electron beam, other energy sources, or any combination of these curing methods. A coil coating application generally will require that the coating have a flexibility of 0-11T, as graded by the T-Bend test in ASTM Method D4145. Preferably, the coating will also have a pencil hardness of greater than 1 H, according ASTM Method D3363.

The following examples are provided to illustrate various embodiments of the invention and are not intended to restrict the scope thereof.

### General Procedure for the Production of a Foam-Core Insulating Panel

Typically the process to produce a foam-core insulating panel of the invention is carried out in the following sequence:
(1) A metal facer, typically rolled strip steel of approximately 0.35 mm, is coated on one side (the exterior face) with an intumescent coating by roller, spray or coil coating. Multiple intumescent coats can be employed so long as the total dry film thickness of the cured intumescent coating is less than 130 microns. Optionally, a primer may also be used between the intumescent coating and the exterior face of the metal facer, and a topcoat can be used to achieve the desired finish on top of the intumescent coating. The curing process optionally can comprise treatments of heat, air, IR, or UV radiation. The interior face of the metal facer will typically be coated with a primer or other corrosion-resistant non-intumescent coating. The intumescent-coated metal facer then may be cut or recoiled or the intumescent coated metal facer also may be profiled prior to application of the foam core formulation.
(2) The metal facer with the cured intumescent coating then is fed onto a foam lamination line with the intumescent coated skin facing external to foam lamination. On this line, a foam formulation, e.g., a polyurethane (PUR) or polyisocyanurate (PIR) foam formulation, is poured between the interior faces of two metal facers in conventional manner and cured. Typically, the lamination process is a continuous double belt process.

The density of the foam core in the foam panel generally is between 30 and 60 kg/m³ and is preferably between 35 and 55 kg/m³. The thermal conductivity of the foam core is typically between 0.018 and 0.024 W/mK according to DIN 52612 Parts 1 and 2. The dimensions of the panels typically range from 20 to 200 mm thick, and 0.5 to 2 m wide.

### Example 1

### PUR and PIR Foam Core Formulations Used for Examples

PUR and PIR foam core formulations were used to prepare the panels in subsequent examples. The PUR formulation incorporated 3.3% n-pentane by weight (total), and the PIR formulation incorporated 5.8% n-pentane by weight (total). Both formulations comprised a polyester polyol, a polyether polyol, a silicone polyether surfactant, water, an amine catalyst, and Fyrol PCF flame retardant. A 30.5 cm x 30.5 cm x 5.1 cm plaque mold heated to 43.3 °C was used to make the panels. The core density of the PUR or PIR foam was approximately 40 kg/m3, and the thermal conductivity was approximately 0.020 to 0.022 W/mK.

### Example 2

### Preparation of an Uncoated Control Composite Panel

A 0.405 mm galvanized steel, 20.3 cm x 20.3 cm facer was cleaned with acetone, placed in the bottom of a 30.5 cm x 30.5 cm x 5.1 cm plaque mold and heated to 43.3 °C. A second steel facer was loosely fixed to the top of inside of the mold such that when a foam formulation was poured into the mold, the mold closed and a foam panel then would be formed. Approximately 250g of foam formulation was poured on top of the bottom metal facer and the mold lid closed. After 10 minutes in the mold, the panel was removed and allowed to cure at room temperature for several days.

### Example 3

### Preparation Of A Composite Foam Panel Incorporating An Intumescent Coating On The Exterior Face Of The Steel Facer

A 0.405 mm galvanized steel, 20.3 cm x 20.3 cm substrate was cleaned with acetone, and then coated with an epoxy intumescent coating commercially available under the trademark CeaseFire (supplied by CoteL Industries) and a curing agent using a Bird bar. The coating was cured at 120°C in air for 30 minutes, and then allowed to sit at room temperature for at least one day. The dry thickness of the intumescent coating was 2.0 (+/-5 microns). The coated substrate was placed intumescent coated side down in a 30.5 cm x 30.5 cm x 5.1 cm plaque mold and heated to 43.3 °C. A second steel facer was loosely fixed to the top of the inside of the mold such that when a foam formulation was poured into the mold, the mold could be closed and a foam panel would be formed between the interior face of each substrate. In this embodiment, then, the foam core faces the interior face of each steel facer and the intumescent coated steel facer remains exterior to the composite foam panel and establishes a facer-air interface.

### Example 4

### Small Scale FR Testing Procedure of the Composite Panels

This burn test was employed for the purpose of evaluating the small-scale flammability performance of composite foam panels. The panels were contacted with a hot flame for a defined period and then, the foam core within the panel was evaluated for the extent of burn.

The 30.5 cm x 30.5 cm x 5.1 cm composite panels prepared by the methods described above were trimmed down around the 20.3 cm x 20.3 cm facers using a saw, such that an 20.3 cm x 20.3 cm foam panel was obtained. The samples were weighed to the nearest gram. Thermocouples were inserted into the foam core at distances of 7 mm, 20 mm, and 35 mm from the bottom facer (exterior face coated facer, if used). The panel was then placed on a support 30 mm above the base of a Bunsen burner. There was a metal collar 7.62 cm in diameter and 1.27 cm high placed directly against the surface of the metal facer (intumescent coated surface, if used). This collar served to contain the flame and to mark the exact area of exposure. The burner was ignited and allowed to burn for 5, 10, or 20 minutes with the flame directly contacting metal substrate. The temperature at the steel facer/flame interface was measured and found to be 700-900 °C, across the 7.62 cm diameter of the collar. Measurements of the thermocouple readings were taken periodically during the test. After the flame was extinguished, the panel was allowed to cool. The thermocouples were removed, the sample weighed again and the mass loss recorded from the test. The metal facers were then carefully pulled off. The foam was cut with a saw directly down the middle of the burn spot (perpendicular cut to the plane of the steel facers). Measurements were taken recording the diameter of the black charred area (designated as char spread), and the depth of the char penetration into the foam core (designated as char depth).

### Example 5

### Comparative Example of an Uncoated PUR Panel

A panel with front and back uncoated steel facers and a pentane-blown formulation was prepared according to Example 2 and evaluated by the method described according to Example 4 using a 5 minute burn. The weight loss was very high (11.2 g), and the depth of black char or completely pyrolyzed foam extended 47 mm into the foam. This was almost a complete burn-through to the metal facer on the back side of the panel (original panel thickness was 51 mm).

### Example 6

### Example of an Intumescent Coated PUR Panel

A panel with a PUR foam core blown with pentane, having a metal facer coated on its exterior face or side with a 50 (+/- 5) microns Epoxy White Cease Fire (CoteL) intumescent coating and an uncoated back facer, was prepared according to the method of Example 3 and evaluated by the method described in Example 4 using a 5 minute burn. The weight loss was only 3.5 g, compared to a weight loss of 11.2g for the corresponding panel of Example 5 without the intumescent coating. This represents almost a 70% reduction in the amount of PUR that was pyrolized during the burn test. The char depth was 31 mm, representing a 34% reduction in the char depth compared to Example 5.

The results also show that the intumescent coating when applied to the exterior face of the steel facer and when pointed toward the flame offered excellent protection due primarily to the limitation of heat transfer to the foam core.

### Example 7

### Comparative Uncoated PIR Panel

A PIR panel with front and back uncoated facers and a pentane-blown formulation was prepared according to Example 2 and evaluated according to Example 4 using a 5 minute burn. The weight loss was 5.0 g, and the char depth was 22 mm into the foam.

### Example 8

### Intumescent Coated PIR Panel

A panel with a steel facer coated on its exterior face with 50 (+/- 5) microns Epoxy White Cease Fire (CoteL) intumescent coating and an uncoated back facer with a PIR pentane-blown formulation was prepared according to Example 3 and evaluated by the method described in Example 4 using a 5 minute burn. The weight loss was 2.0 g, and represented a 60% reduction in the pyrolyzed material compared to that in the uncoated sample of Example 7. The char depth was 15 mm into the foam, representing a 32% reduction in char penetration into the foam core compared to the uncoated sample of Example 7.

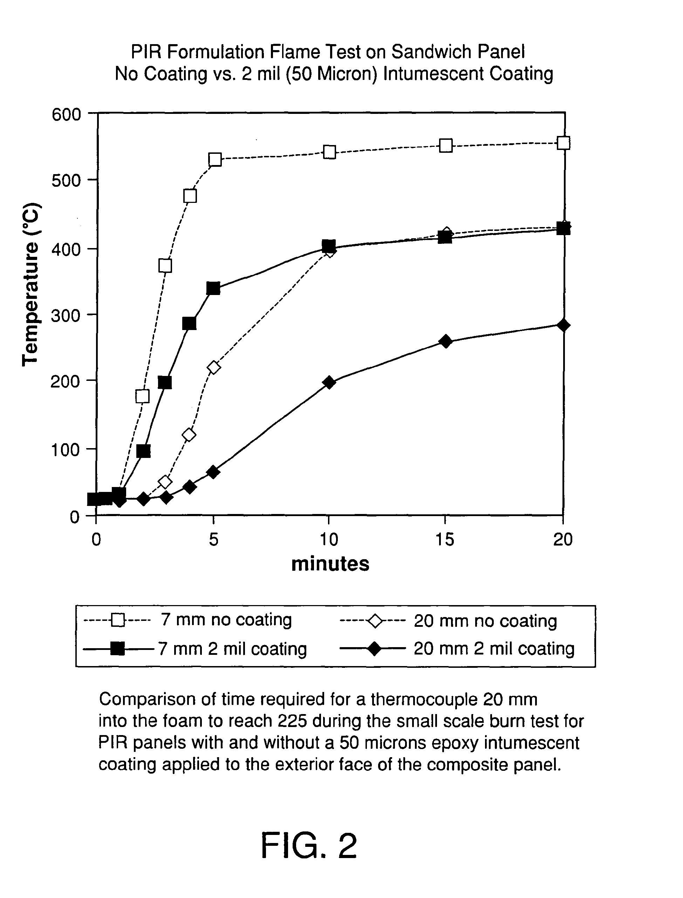

Fig. 2 shows the temperature profile of the foam core verses time for the composite foam panels of Examples 7 and 8 during an extended burn at a depth of 7 and 20 mm. As can be seen the data show a much lower temperature profile over a much longer time when the exterior face of the metal facer of the composite foam panel is coated with the intumescent coating to that of the uncoated composite panels. The results show that improved fire resistance can be imparted to composite foam panel even when employing a polyurethane foam blown with a flammable blowing agent.

### Example 9

### Uncoated PIR Panel - Extended Burn Test:

A panel with front and back uncoated metal facers and a pentane-blown PIR formulation was prepared according to Example 3 and evaluated by the methods described in Example 4 using a 20 minute burn. Thermocouples were inserted at 7 mm and 20 mm from the coated facer directly under the burn site, and the temperature profiles were recorded during the burn. The weight loss after 20 minutes was 11.0 g, and the char depth was 35 mm into the foam. The time for the foam core to reach 225 °C at the 20 mm thermocouple was 5 minutes.

### Example 10

### Intumescent Coated PIR Panel - Extended Burn Test

A panel with an exterior face of the metal facer coated with 50 (+/- 5) microns Epoxy White Cease Fire (CoteL) intumescent coating and an uncoated back facer with a foam core of pentane-blown PIR formulation was prepared according to Example 3 and evaluated by the methods described in Example 4 using a 20 minute burn. Thermocouples were inserted at 20 mm and 35 mm from the coated facer directly under the burn site, and the temperature profiles were recorded during the burn. The weight loss after 20 minutes was 5.6 g, representing a 49% decrease in the amount of mass loss to pyrolysis. The char depth was 28 mm, or a 20% reduction compared to the corresponding panel without an intumescent coating in Example 9. The time for the foam core to reach 225 °C at the 20 mm thermocouple was 10.8 minutes, representing almost a 6 minute increase in the time for the PIR core to reach the critical temperature of 225 °C.

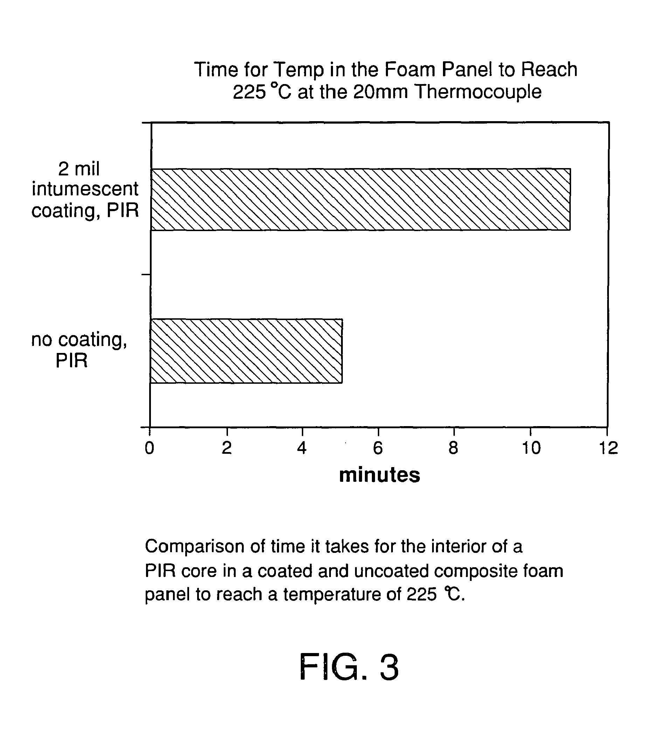

Fig. 3 is a bar graph representing the results of Examples 9 and 10 and it illustrates the significant difference in time required to reach 225 °C.

### Comparative Example 11

### Intumescent Coated PIR Panel - Extended Burn Test Where Intumescent Coating Is Coated On The Interior Face Of The Metal Facer

The procedure of Example 3 was followed except the steel facer was placed in the bottom of the plaque mold such that the 50 +/-5 microns coating of CoteL CeaseFire epoxy faced the foam side of the mold, and, thus, the resulting panel had the intumescent coating applied to its interior face at the foam-facer interface. No coating was applied to the exterior face of the steel facer employed in the panel. The panel was then evaluated according to Example 4 using a 20 minute burn. The mass loss recorded after the test was 9.2 g, the char depth was 35 mm and the char spread was 115 mm. This represents only a slight (16%) improvement in weight loss and char spread, and no improvement in char depth versus the uncoated sample of Example 9.

### Example 12:

### High Temperature Rapid Cure of an Intumescent Liquid Epoxy Coating

The commercial epoxy resin CeaseFire (CoteL Industries) was used as the base-resin. To this, Epidol 748 (Air Products and Chemicals, Inc.) and xylene were added to obtain a viscosity of < 200 centipoise. To the resin mixture, the curing agent Ancamine 1769 (Air Products and Chemicals, Inc.) was added and coating was mixed with a wooden spatula. A bird bar or draw-down bar was then used to coat a galvanized 0.405 mm steel substrate. The substrate was immediately placed in an oven at 250 °C for 60 seconds, then removed. The peak metal temperature during this time was 210-220 °C. Upon cooling to room temperature, the coating had a dry film thickness of 50 (+/- 5) microns, a pencil hardness of 1 H, and a flexibility of >5T. Heating the coated substrate with a butane torch for several minutes produced a char with a height of several mm.

These results show that a high temperature, rapid cure epoxy resin binder can be used as an intumescent coating and achieve good results in terms of limiting heat transfer through the exterior face of the metal facer and to the foam core.

Table 1 sets forth the results in table form for Examples 5-11.

**Table 1**

| Results from Small Scale FR Test Example | Intumescent Coating Thickness (microns) | Rigid foam Type | Burn Time (min) | Weight Loss (g) | Char Depth (mm) | Char Spread (mm) |
|---|---|---|---|---|---|---|
| 5 | 0 | PUR | 5 | 11.2 | 47 | 165 |
| 6 | 50 at facer-air interface | PUR | 5 | 3.5 | 31 | 103 |
| 7 | 0 | PIR | 5 | 5 | 22 | 90 |
| 8 | 50 at facer-air interface | PIR | 5 | 2 | 15 | 75 |
| 9 | 0 | PIR | 20 | 11 | 35 | 125 |
| 10 | 50 at facer-air interface | PIR | 20 | 5.6 | 28 | 85 |
| 11 | 50 at facer-foam interface | PIR | 20 | 9.2 | 35 | 115 |

Composite panels prepared by the above method show enhanced resistance to extreme heat situations, such as a fire. In a test where a composite panel is exposed to direct contact with a butane flame for 5-20 minutes at the surface of a metal facer, the composite panel of the invention shows:
(1) at least a 10% reduction in the depth of black char into the PUR or PIR foam core;
(2) at least a 2 minute delay in the time it takes for the PUR or PIR foam core to reach 225 °C at a depth of 20 mm from the metal facer; and,
(3) at least a 20% improvement in the weight loss of the panel in the area of the burn due to pyrolysis or burning.

Summarizing the results show that application of an intumescent coating to the exterior face of a metal facer of a composite foam panel and directing the intumescent coated surface of the panel toward an elevated temperature enhances the resulting fire resistance of the panel.

Although not intending to be bound by theory, it believed that applying the intumescent coating as a thin coat, e.g., 130 microns or less to the exterior face of the facer allows for significant expansion of the coating at the facer air interface thereby decreasing heat transfer through the facer to the insulating core. The application of an intumescent coating or layer interior to the panel, as for example to the interior face of the facer, does not allow for significant expansion. The failure of the intumescent coating to expand apparently allows for increased heat transfer to the insulating core thereby resulting in higher internal temperatures.

Finally, the application of a thin film of intumescent coating to the exterior face of a facer of a composite insulating panel prior to providing core-material of the panel overcomes many shipping and construction difficulties associated with prior procedures. On site coating of pre-formed panels requires considerable labor for the coating application, and further, coatings of 1000 microns thick and above as done in the prior art may require hours to days to cure at ambient temperatures.

With respect to shipping, metal facers are usually pre-coated on both sides with a corrosion resistant liner or enamel on a coil-coating line prior to the formation of the foamed panel. Panels are not shipped with uncoated steel facers because of the possibility of corrosion. However, when the exterior face of the metal facer is coated with the intumescent coating, the corrosion resistant liner may be eliminated from that face.

Although not illustrated in the examples other evaluations of the composite panels illustrate that a number of problems can exist when employing the fire barrier approaches of the prior art. One problem with the use of a protective intumescent or thermal barrier layer or mat applied interior to the composite foam panel, i.e., on the interior face of the metal facer, is that it can result in delamination of the composite foam panel due to adhesion problems. Another problem is that the thermal barrier or mat can also negatively effect the weight/insulation value ratio of the overall composite foam panel.

## Claims

1. In a process for producing a composite insulating panel which comprises the step of applying an insulating core to an interior face of at least one facer having an exterior face and said interior face, the improvement which comprises:
applying an intumescent coating composition to the exterior face of said facer in an amount to provide an intumescent coating having a dry film thickness of 10 to 130 microns; and,
subsequently applying said insulating core to the interior face of said facer.

2. The process of Claim 1 wherein the insulating core is a foam core and is comprised of a foamed polymeric material and the facer is comprised of metal.

3. The process of Claim 2 wherein the foam core is applied between said metal facer having said intumescent coating on its exterior face and a second metal facer.

4. The process of Claim 3 wherein the foam core is comprised of a foam formulation selected from the group consisting of polystyrene, polyester, polyurethane and polyisocyanurate.

5. The process of Claim 4 wherein the foam core is formed of polyurethane or polyisocyanurate.

6. The process of Claim 5 wherein the foam core includes a blowing agent selected from the group consisting of a hydrocarbon, water, a hydrochlorofluorocarbon, a hydrochlorocarbon, and a hydrofluorocarbon.

7. The process of Claim 6 wherein the blowing agent is selected from the group consisting of n-pentane, cyclopentane, isopentane, butane, 1-pentene, cyclopentene, hexene, hexanes, cyclohexane, and heptane.

8. The process of Claim 2 wherein the intumescent coating is applied on top of a primer layer of non-intumescent coating.

9. The process of Claim 2 wherein a top coat is applied to the intumescent coating.

10. The process of Claim 1 wherein the intumescent coating is comprised of a binder, an acid donor, a spumific, and a polyhydridic carbon donor.

11. The process of Claim 10 wherein the poyhydridic carbon donor is selected from the group consisting of pentaerythritol, dipentaerythritol and sugar.

12. The process of Claim 1 wherein the intumescent coating will expand on application of heat to a height of at least 1 mm when exposed to a temperature of 500 °C for 5 minutes.

13. The process of Claim 1 wherein the intumescent coating is obtained from a two-part intumescent coating formulation which includes an amine-cured epoxy resin.

14. In a process for producing a composite foam panel comprising the step: providing a foam core facing an interior face of at least one metal facer, said metal facer having an exterior face and an interior face, the improvement which comprises:
applying an intumescent coating to the exterior face of the metal facer on a coil coating line, said intumescent coating having a dry film thickness of from 10 to 130 microns.

15. The process of Claim 14 wherein the intumescent coating cures at a rate to accommodate a line speed of 50 to 800 ft/min in the coil coating process.

16. The process of Claim 14 wherein the intumescent coating cures with a time of from 5-120 seconds.

17. The process of Claim 14 wherein the intumescent coating cures to a hardness of greater than 1 H and a flexibility greater than 11 T at a dry film thickness of less than 130 microns on steel substrates that are 0.8 to 0.3 mm thickness.

18. The process of Claim 14 wherein the intumescent coating expands to a height of at least 1 mm when heated to a temperature of 500 °C for 5 minutes.

19. The process of Claim 14 wherein the intumescent coating incorporates a polyhydridic carbon such that on application of heat a char is formed.

20. The process of Claim 14 wherein the metal facer has a thickness of from 8 mm to 10 microns.

21. In a process for producing a composite foam panel comprising the step of providing a foam core facing an interior face of at least one metal facer having an exterior face and an interior face, the improvement which comprises:
coating the exterior face of the metal facer with an intumescent coating, said coating having a dry film thickness of from 10 to 130 microns;
subsequently feeding the metal facer having the cured intumescent coating on its exterior face to a foam lamination line with the intumescent coated skin facing external to foam lamination; and,
providing a foam formulation capable of forming said foam core between the interior face of said metal facer and an interior face of a second metal facer on said foam lamination line.

22. The process of Claim 21 wherein the intumescent coating is applied to the metal facer on a coil coating line.

23. The process of Claim 22 wherein the foam lamination line is a continuous double belt.

24. The process of Claim 23 wherein the foam formulation is a polyurethane or polyisocyanurate formulation.

25. The process of Claim 24 wherein the foam core includes a hydrocarbon blowing agent.

26. The process of Claim 25 wherein the blowing agent is selected from the group consisting of n-pentane, cyclopentane, isopentane, butane, 1-pentene, cyclopentene, hexene, hexanes, cyclohexane, and heptane.

27. A composite foam panel comprised of a metal facer having an interior and an exterior face wherein an intumescent coating applied to its exterior face at a thickness of 10 to 130 microns and a foam core facing said interior face of said metal facer.

28. The composite foam panel of Claim 27 wherein the foam core is sandwiched between interior faces of two metal facers.

29. The composite foam panel of Claim 27 wherein the intumescent coating incorporates a polyhydridic carbon donor.
